# EUROPEAN PATENT APPLICATION

(11) **EP 2 166 500 A1**
(43) Date of publication of application: **24.03.2010**
(21) Application number: 09010460.5
(22) Date of filing: 13.08.2009
(51) Int. Cl.: G06Q 30/00

(54) **System and method for conducting auctions**

(30) Priority: 03.09.2008 US 203646
(71) Applicant: Bouhana, Gerald, Miami Beach FL 33139 (US); Warnant, Hugo, Miami Beach, FL 33139 (US)
(72) Inventor: Bouhana, Gerald, Miami Beach FL 33139 (US); Warnant, Hugo, Miami Beach, FL 33139 (US)
(74) Representative: Müller - Hoffmann & Partner

(57) **Abstract**

A method and system for conducting an auction in an adult-entertainment facility includes a display operable to display a plurality of entertainer identifiers each corresponding to a different one of a plurality of adult entertainers within an adult-entertainment facility. Bidding devices with unique bidder identifiers are used by patrons and are operable to electronically transmit bids to a central processor, which associates the bid with the identified entertainer and bidder and determines if the bid has a bid-winning status. If the bid has winning status at the end of the auction, the bidder is provided with the dancer's company for a pre-set amount of time.

## Description

### FIELD OF THE INVENTION

The present invention relates generally to auctions, and more particularly relates to auctioning time with adult entertainers in adult-entertainment establishments.

### BACKGROUND OF THE INVENTION

Adult entertainment facilities vary greatly in type and format. One general commonality is that dancers, whether women or men, perform for the purpose of soliciting money in the form of tips from the patrons who visit the club. These facilities are successful because of their favorably balanced business model of low overhead and low costs and workers that not only attract the patrons themselves, but also actually pay to work there as independent contractors (how much they pay depending on location and shifts, with some shifts costing several hundred dollars). In addition, the facilities often share in the tips the entertainers receive each shift. Furthermore, because the entertainers are legally classified as contractors, benefit expenses for the clubs are low.

Adult entertainment facilities enjoy three basic streams of revenue in addition to the fees received from dancers. A first stream is generated by charging a "cover charge" at the front door. These cover charges are simply admission fees and can sometimes exceed $40. A second revenue generator is the sale of food and drinks within the clubs. It is very common for drinks to cost over $10 each and some clubs have requirements that force patrons to purchase a minimum number of drinks. A third source of revenue currently being employed by many of these clubs is private room rentals. The rooms are available usually in a remote area of the building and are shielded from view of the other patrons. By paying a rental fee, often as much as $400 to $500, a dancer will keep the patron company for period of time in these rooms.

When a patron has an interest in a particular dancer, and would like to spend time with that dancer, the patron's options to monopolize the dancer's attention and time are very limited. One option for obtaining the dancer's attention is to approach the dancer and ask him or her to join the patron at his or her table. Many times the patron is shy or feels uncomfortable approaching the dancer, who is many times in the company of other patrons.

A second option for gaining the attention of a dancer is to engage the help of a staff member of the establishment to bring a dancer to his table. This is often difficult, as the staff is busy and difficult to find or may not want to take the time to track down the dancer. In addition, the patron will most likely have to tip the staff member for providing this service.

A third option is to wait until the dancer happens to come over to the patron's table. Because this is not a guaranteed event, it can take a great deal of time or luck. In the mean time, while the patron is waiting for a particular dancer to come by, he will be unlikely to spend time with other dancers, thereby denying the club and other dancers of revenue.

Even when the patron is successful in attracting the dancer of interest to his or her table, the patron does not have a monopoly on the dancer's time and cannot be guaranteed that the dancer will remain at the table. In fact, the current system of obtaining the dancer's time is directly opposite to the individual patron's interests; specifically, conversing and spending time with customers on the floor or at their tables is not actually a service for which dancers can or do charge. Because dancers can only guarantee a receipt of revenue by providing personal dances, from the dancer's point of view, it is undesirable to spend time conversing with a patron, in essence, "off the clock." Therefore, unless the patron offers money to the dancer merely for sitting at his table, the dancer is encouraged to move on and look for other patrons to hire her/him. In sum, the patron's only options to secure a dancer's time are to pay for a personal dance, each one lasting only about 3 minutes, or go to a private room (sometimes referred to as a champagne room), which can be very expensive. Neither of these options is optimal for those patrons looking for companionship and fun in the form of a private conversation with a dancer at his or her table.

Although dancers generally do not make money conversing with the patrons, it is still an activity in which each must participate. Walking up to a table and simply asking if the patron desires a dance is generally not an effective way to earn money. To get a patron to buy a dance, a dancer needs to make conversation and be friendly. Again, the dancer is not generating money during this process and there is no guarantee that the patron will purchase a dance at the end of the conversation.

From the club owner's point of view, dancers conversing with patrons does not maximize profits. The club does not make any money at all while dancers are sitting and talking. Naturally, club owners want dancers to spend as much time as possible participating in activities generating revenue for the club. For instance, most clubs charge a minimum dollar amount for use one of their champagne rooms and the money is shared between the dancer and the club. In addition, the club makes money off the sale of the bottles of champagne or liquor. Unfortunately, only a small percentage of the clientele can afford to rent a private room. Also, patrons do not like the feeling of being pressured to go into a private room.

Another disadvantageous feature of clubs in which adult entertainment is provided is that the ambient noise is typically quite high. This leads to the inability of patrons to speak across any distance to either the dancers or club staff and obtain their attention without attracting undesirable attention to the patron. In such an environment, it is extremely difficult to conduct a traditional auction, especially one that occurs through only verbal or gesture communications.

Therefore, a need exists to overcome the problems with the prior art as discussed above.

### SUMMARY OF THE INVENTION

Briefly, in accordance with the present invention, disclosed is method and system for conducting an auction in an adult-entertainment facility. The method and system includes a display operable to display a plurality of entertainer identifiers each corresponding to a different one of a plurality of adult entertainers within an adult-entertainment facility. Bidding devices with unique bidder identifiers are used by patrons and are operable to electronically transmit bids to a central processor, which associates the bid with the identified entertainer and bidder and determines if the bid has a bid-winning status. If the bid has winning status at the end of the auction, the bidder is provided with the dancer's company for a pre-set amount of time.

In accordance with another feature, an embodiment of the present invention includes identifying at least one adult-entertainment dancer with a unique identification, distributing at least one electronically wireless remote auction bidding device to a patron of an adult-entertainment facility, the bidding device having a unique bidding identifier and operable to electronically transmit a bid, electronically wirelessly connecting the bidding device to an electronic dancer time bidding system operable to receive at least one bid from the bidding device, to associate the bid with the unique identification, determine if the bid has a bid-winning status, and to identify, at least to the dancer, the patron employing the bidding device corresponding to the bid having the bid-winning status, and providing the patron with the dancer's company for a pre-set amount of time.

In accordance with a further feature of the present invention, the method includes displaying on a display an identifier of either or both the bidding device and/or a secret identifier of the patron employing the bidding device, the secret identifier being only known to the patron employing the bidding device and an agent of the adult-entertainment facility.

In accordance with another feature of the present invention, the bidding device is associated with a table location, thereby allowing the entertainer to quickly locate a winning bidder.

In accordance with yet another feature, the present invention includes receiving a message from the patron employing the bidding device; and transmitting the message to a second bidder for display on a display device associated with the second bidder.

In accordance with a further feature of the present invention, a system for conducting an auction in an adult-entertainment facility includes a display operable to display a plurality of entertainer identifiers each corresponding to a different one of a plurality of adult entertainers within an adult-entertainment facility, a first wireless transmitter operable to submit at least one of the entertainer identifiers, a first device identifier, and a first bid amount as consideration for receiving an amount of exclusive time with the identified adult entertainer, a receiver operable to wirelessly receive the entertainer identifier, the first bid, and the first device identifier from the first wireless transmitter, a second wireless transmitter operable to submit the entertainer identifier, a second bid, and a second device identifier, and a processor operable to determine which of the first bid and the second bid has a winning status and transmit display instructions to the display for displaying the bid with the winning status and a bidder of the bid having winning status.

### BRIEF DESCRIPTION OF THE DRAWINGS

In the following, the invention will be described in more detail by exemplary embodiments and the corresponding figures. The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention. These schematic illustrations are not true to scale.

FIG. 1 is a diagrammatic perspective view of an adult-entertainment venue implementing an inventive auction system in accordance with an exemplary embodiment of the present invention.

FIG. 2 is a block diagram of devices useful for implementing an auction system in accordance with an exemplary embodiment of the present invention.

FIG. 3 is perspective view of the devices shown in FIG. 2 being used in the adult-entertainment venue of FIG. 1 in accordance with an exemplary embodiment of the present invention.

FIG. 4 is a process flow chart showing steps of performing an auction in an adult-entertainment venue in accordance with an exemplary embodiment of the present invention.

### DETAILED DESCRIPTION

While the specification concludes with claims defining the features of the invention that are regarded as novel, it is believed that the invention will be better understood from a consideration of the following description in conjunction with the drawing figures, in which like reference numerals are carried forward. It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention.

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically.

The present invention provides a novel and efficient system for bidding on sessions of time with adult entertainers, however, the invention is not limited to the adult entertainment industry. For example, the methods and systems of the invention can be applied to time with celebrities or people of interest not related to adult entertainment, to use of products or other systems, or for purchase of goods and/or services.

According to an embodiment, and as will be described in detail below, patrons of an adult-entertainment venue will be able to participate in live auctions and bid to win sessions of exclusive time with the dancers until their next stage show begins or for any other predefined amount of time. The classic method of conducting auctions is difficult or impossible in an adult club due to the live performances and loud music. To this end, embodiments of the present invention provides wireless remote bidding devices to each patron for use while dancers are on stage and performing, for instance, a "strip tease". To submit a bid for the current performer, for example, a bidder simply presses a "bid" button on the handheld device. The device sends a "bid" signal that identifies the bidder (device) and distinguishes the bidder (device) from all other bidders (devices). A prior registration process is used to match device IDs with bidder identities to allow the auctioneer (human and/or electronic) to know who is submitting a bid at any given time. The handheld device can include a display for a visual user interface and provide a two-way communication to indicate to the bidder his position in the auction and information about the entertainers participating in the auction. Any kind of information can be contained on the device. For example, exclusive pictures or video about the dancer (or other dancers) can be displayed only to the patrons who are bidding actively. The device is not limited to just the performing dancer. For example, a list of all of the dancers (textual, pictorial, or videographic) can be displayed to the patron and can permit bidding on any dancer within the club. Also, the club can advertise on the bidding system and can provide special discounts, for example, reduced prices for dance purchases. Another kind of discount can be included in the bidding process for food, drinks, or even bottles of liquor. Bidding on such products can, for example, include cost discounts and/or can be combined with a reduced cost or free dance, a reduced cost or free article of clothing with the club's logo, a reduced cost or free admission ticket for a subsequent day, or any other item.

The entertainment venue may include contiguous stages with multiple dance areas or non-contiguous stages. Generally, entertainers begin their shows at individually appointed times over an extended period, so that performances are occurring simultaneously between the stages or stage areas through most of the duration of the hours of operation of the entertainment facility. The presently inventive auction can simultaneously encompass multiple stages and multiple entertainers. In one exemplary embodiment, patrons can place bids on more than one dancer at any given time with the individual wireless remote bidding device. The winner of the auction can be the highest bidder at the end of the song, which corresponds to the end of the performance for each entertainer on the stage. In an additional embodiment, the present invention allows patrons to remain apprised of the progress of other auctions, even those occurring in disparate locations. The interactivity afforded by the present invention provides a marked enhancement of the patrons' experience. In one sense, it adds a gambling-like environment and, at the very least, provides enjoyable and healthy competition among the patrons. In addition, the present invention provides a completely new stream of revenue that is enjoyed by the performer and the venue.

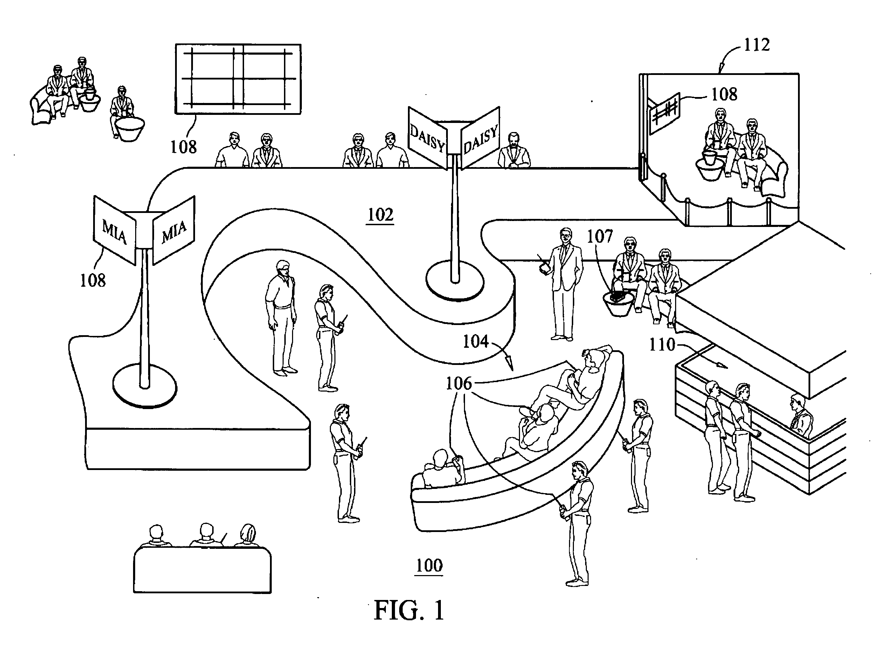

FIG. 1 is an illustration of an exemplary non-limiting implementation of the present invention. FIG. 1 depicts an interior 100 of a business that may implement the presently inventive devices, system, and business method. The interior 100 includes one or more dance areas, such as a stage 102 and at least one viewing area 104 where patrons can see the entertainers dancing on the stage(s) 102. According to one exemplary embodiment, the invention includes a plurality of handheld bidding devices 106 that can each be used by one of a plurality of bidders to submit bids as offers to purchase time with the dancers on the stage(s) 102. In accordance with an embodiment of the present invention, at least some of the bidding devices 107 are not mobile, but are instead at fixed locations, for example, on or near each table. In such an embodiment, patrons can register at their table with a credit card. A table-mounted or free-standing bidding device 107 can be positioned anywhere throughout the club. For example, if a patron desires to enter the club anonymously and remain anonymous while in a private room, that room can have a semi-permanent or permanent bidding device 107. Such a device 107 can be desirable in another way if the patron wants to have a video screen that is much larger than a simple hand-held device. Fixed devices 107 can have screens as large as desired, depending upon the clubs' and patrons' needs and budgets. In such a case, if pictures or video is being displayed, the patron will have the opportunity to see the information in a greatly enlarged scale. Additional revenue can be made by requiring the patron using this enlarged screen to pay a fee for viewing the pictures/video when not actively bidding.

The number of patrons constituting the plurality of bidders can vary depending on factors such as the size and nature of the venue, the availability of devices, an implementation where bidders can use user-supplied wireless remote bidding devices 106, an ability for two users to share a single bidding device 106, 107, and other factors. Preferably, the opportunity to participate in the various interactive features of the present invention, along with eligibility for the various prizes and other incentives, are offered to substantially all the patrons at the venue. Such auctions conducted at an adult-entertainment venue in accordance with embodiments of the present invention beneficially evoke a high level of interest due to the level of enthusiasm and excitement typically present at a live event.

In the embodiment shown, the bidding devices 106, 107 are wireless devices capable of transmitting and in some cases receiving electromagnetic or infrared communication waves. Exemplary of bidding devices 106 vary from simple transponders to personal digital assistants (PDA), Pocket PC's, and cellular telephones. In at least one location within the room 100 there are one or more displays 108 for displaying the highest bid and possibly other information, such as the dancer's name and time remaining for bidding on the dancer.

In one exemplary embodiment, the bidding system operates by having a patron indentify a dancer with which he or she would like to spend time, e.g., after the dancer exits the stage. It should be noted that there is no requirement that the dancer be on stage 102 when bidding occurs, however, for purposes of the instant discussion, the entertainer will be assumed to be on the stage 102. Once the dancer is identified, a patron will electronically submit a bid for the opportunity to spend time with the dancer. The details of submitting a bid are described below. The patron's bid is displayed on the display 108. Other patrons can bid as well and the current highest bid will be displayed on the display 108. The display 108 continuously allows the other bidders to see what amount must be exceeded in order to purchase time with the dancer. The public display 108 may also show the identifier of the current highest bidder so the patron will know whether or not he or she is winning the bid. This is especially important when simultaneous bids are submitted for the same amount. The identifier can be an anonymous number or code that does not identify the bidder to anyone other than the bidder and, thereby, the club. Alternatively, the bidder can be identified with a unique identifier that the patron can choose. If the patron frequents the club often, then the dancers have the ability to recognize that unique identifier and attempt to obtain greater and greater bids for his/her time.

Once the bidding time ends, at the end of the dancer's song, for instance, the current highest bidder is determined and the payment from the bidder is processed in any one of a plurality of ways. For instance, the bidder's credit card or debit card can be used to transfer money (whether at that time by inputting it into the bidding device 106, 107 or by a card previously identified and authorized, for example, at a cashier kiosk 110), he can pay by cash, check, or any other method of making a payment. Once the payment is processed, the highest bidder is identified to the dancer. The dancer will then join the highest bidder for the predetermined amount of time. The dancer, either before or after spending time with the highest bidder, will receive a predetermined share of the highest bid amount.

One way of submitting bids, in accordance with the present invention is through an electronic bidding device 106. The electronic bidding devices 106, 107 can be wired or wireless and can be provided to patrons who register upon entry to the club or at any time after entering the club. The cashier kiosk 110 can also function as a station within the club that distributes the handheld bidding devices 106. The patron may establish an account at the club and, thereafter, use the account for submitting bids. In this exemplary embodiment, the kiosk's clerk creates a new account or confirms/checks the user's pre-established account to insure that he or she is qualified to submit bids. If the user is not already in a bidder database, then a registration process may be performed, in which the user supplies information (e.g., by scanning an ID card, credit card or other data entry process) that provides the user's identification to the auction authorities. This step will likely involve submitting a deposit or providing a form of security before receiving a bidding device 106. If the deposit is a credit card, all bids can be processed directly through the card. After verification/account activation, the patron is provided with the bidding device 106. This provision includes assigning an RF channel and a terminal ID to the customer and is performed by turning on the handheld terminal 106, which causes a "splash screen" to show RF channel and terminal ID info. The staff member then enters the info into the auction software. In a following step, the staff member or patron can press enter on the handheld terminal 106 to move past the splash screen and sign on to the system. The bidder number is then entered, which will enable the handheld terminal for use by the bidder. If the RF channel and terminal ID does not match the bidder number, the auction software will not enable the unit for bidding. As an option, a bid-total warning amount can be set, which will warn a bidder or the establishment when a bidder has exceeded a maximum amount.

If desired, the wireless remote bidding devices 106 can be provided complimentary to selected patrons as part of the price of admission or, for instance, with the purchase of a liquor bottle at a VIP section 112 or, alternatively, as an optional rented item. Loaning equipment to bidders raises issues such as breakage, inadvertent carrying away of the equipment, theft, and usability. For example, using a WIFI-connected PocketPC or Personal Digital Assistant (PDA) as the bidding device may invite theft because such devices are expensive, are general purpose and can be used for many different functions other than auction participation. Alternatively, provision of a single-purpose handheld bidding device with no useful purpose other than participating in an auction reduces the chance of theft and increases the chance that bidders who inadvertently take away a device will return it. The kiosk 110 can also function as a repository for dropping off bidding devices 106 when done. At this time, the customer's credit line can be shut off and the customer provided with a receipt or some other documentation that can be used both as a confirmation of what the customer spent that night and as an assurance against unauthorized charges after he or she leaves.

In one implementation of the present invention, a unique identifier is associated with each wireless bidding device 106. This identifier can, for example, include a digital identifier value hardwired or stored in a memory within the device or be a programmable non-static identifier. The identifier can then be used during the bidding process to identify the bidder and the bidder's device and for the bidder to identify himself when his bid is shown on the display 108. The device 106, 107 can also have an authentication indicator that is visible to the dancer (and, possibly, for dancer acceptance for accounting purposes) to confirm the winning bid with the device 106, 107 holder/user. As a further option, at the time of device assignment, a member of the club staff can walk the customer to a table so that the device, customer, and table are identified. This identification allows a dancer to easily locate and maneuver over to a winning bidder since she will know at which table he is seated.

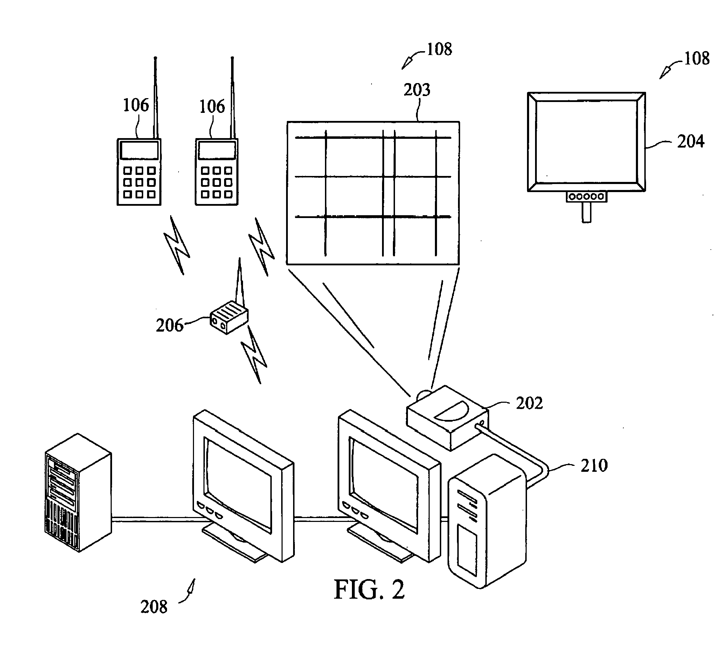

The display 108 can be provided in multiple types and these multiple types can be used in conjunction with one another. For instance, as shown in FIG. 2, the display 108 can be large-scale visual displays, such a projector 202 and screen 203. The display 108 can also be a video monitor 204, e.g., CRT, LCD, or plasma. The display 108 can also be any other device capable of communicating messages, whether audible, textual, or graphic and will display all the auctions details such as the name and picture of the dancers on stage and the current bids and identity of the current highest bidder. In one embodiment, the display 108 will present a matrix of information. Examples of this information are the an identifier of the performer, a short description or other pertinent information pertaining to the dancer, their skills, background, experience, etc. In another portion of the screen, the performer's image can be shown. In addition, bidding information, such as the current high-bid amount, an identifier of the highest bidder, the next minimum higher bid that can be submitted, and a buy-it-now amount, where a bidder can skip the bidding process and simply end the auction by bidding the requisite buy-it-now price. In an embodiment of the present invention, the buy-it-now price will only be available for a finite period, e.g., one minute, at the beginning of the auction. The display 108 will also show a real time clock, which counts down the time left in the active bidding round. In the last 30 seconds this countdown timer can indicate bidding is almost over, for example, by flashing red.

Each of the displays 108 can be run by a local server 208 capable of executing computer-readable instruction and outputting display signals for displaying information on the display devices 108. The local server 208 receives inputs from and transmits signals over a hardwire 210 or to a transceiver 206, which may, for example, include an RF receiver/transmitter, such as is used in an 802.11 access point, an IR transceiver, or any other type of wireless technology. The local server 208 in the exemplary illustrative non-limiting implementation will provide connectivity and coordination with the wireless remote bidding devices 106 to reliably manage incoming bids.

The local server 208 includes a processor capable of executing instructions that are part of the auction software. The software includes listening/filtering technology to discern the various device/patron identifiers and bids received. The local server 208 then uses the previously established association between the user's identity as determined at the kiosk 110 and the identifier of the wireless remote bidding device 106 issued to the user to register a bid with a particular bidder.

Through use of the bidding devices 106, 107 and the feedback of the various displays 108, patrons can participate simultaneously in one or more live auctions involving one or more performers. The wireless remote bidding devices 106, 107 provided would allow the bidders to indicate for which of the several performers he or she is submitting a bid.

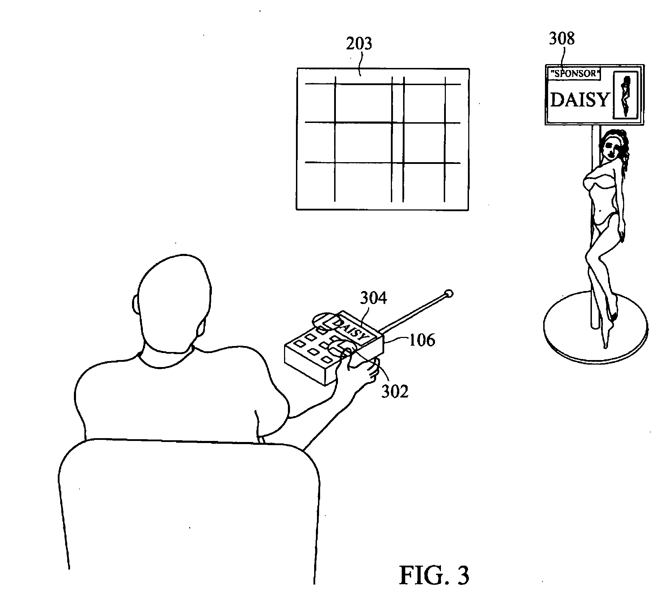

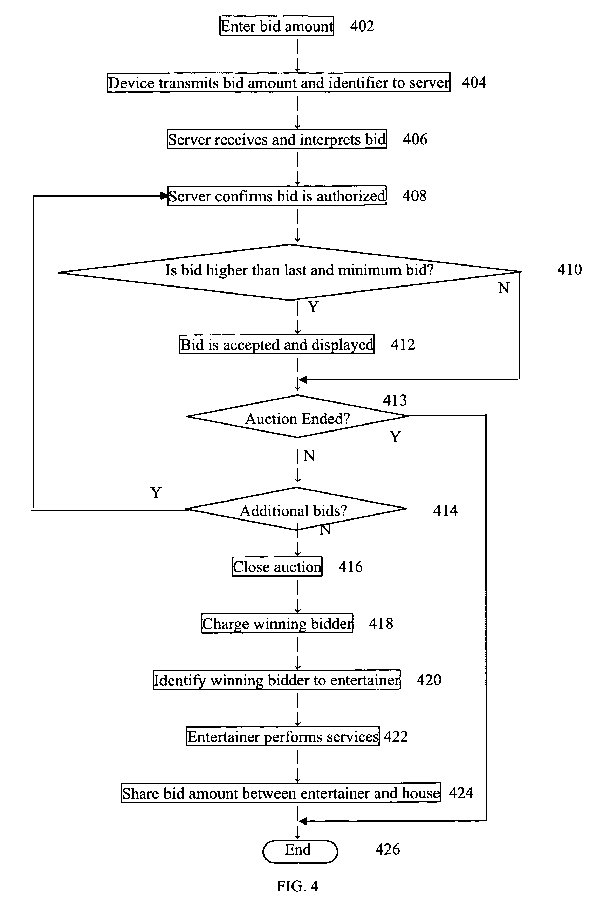

FIG. 3 shows further details of the auction system and FIG. 4 shows an exemplary process of conducting an auction with the present invention. Looking first to FIG. 3, the exemplary illustrative non-limiting wireless, remote, handheld bidding device 106 may in some implementations further include additional controls 302 to provide additional functionality. The controls 302 are able to function as bid entry and/or bid submission features, which can be any type, such as a push button, a touch screen, or any other electrical, mechanical, or electromechanical device with which a bidder can indicate that he or she wishes to submit a bid at the auction or conduct other communication with or through the device 106. The herein mentioned controls also can be applied to the fixed devices 107.

An optional display device 304 may be used to display information the local server 208/transceiver 206 sends back to the device 106, 107 during a communication session. The electronic display 304 may be of many types, e.g., employing liquid crystal or electroluminescent displays. In some exemplary implementations, the communication between device 106, 107 and local server 208 is unidirectional, i.e., the only communication that exists is the device transmitting an ID to the local server. In other embodiments, the local server 208 is able to communicate information back to the wireless remote bidding device 106, 107 for processing, display, or uses of auction-related information.

In operation, a bidder holding the handheld device 106 can walk about at will during the auction. The self-powered, portable, and wireless features of the device 106 do not restrict the bidder's movements in any way. When a bidder operating the device 106 wishes to submit a bid, as shown in step 402 of FIG. 4, he or she simply enters the bid amount and presses the bid button. If there is more than one entertainer to bid on at a single time, the bidder can also transmit an entertainer identifier to the server 208.

When the user presses the bid button, in step 404, the device transmits its unique identifier to the local server 208. The identifier is unique among all other devices 106 at the auction and identifies either the device, the user of the device making the bid, or both. The local server 208 then, in step 406, receives the bid and identifier and interprets the incoming message as a bid on a particular performer (e.g., on one of the stages), thereby associating the received bid with the corresponding bidder. In step 408, the server 208 confirms that the device 106, 107 is authorized to place bids, i.e., is associated with a properly registered bidder.

In step 410, the server 208 checks to see if the current bid is the highest bid or higher than a minimum opening bid. If it is, the bid is accepted in step 412 and the bid amount and bidder identification will be displayed on a main display screen 203 for all other bidders to see. In one exemplary embodiment, the bidder identification is not displayed to identify the current highest bidder to the other bidders but, rather, to inform the other bidders that they do not have the current highest bid. In other words, it indicates to them that they must bid a higher amount to win the auction. In another embodiment, the identification may be, for example, a pre-assigned number or the user-selected screen name.

In step 414, the process waits for additional bids. If an additional bid is received, the flow moves back up to step 408. If no additional bids are received, either because no bidders bid or due to a time expiring for the auction, the auction closes at step 416. The winning bidder is then charged for the bid amount in step 418 and is identified to the subject entertainer in step 420 so that the entertainer can join the winning bidder for the specified amount of time. In step 422, the performer provides his or her services, which may include sitting and conversing with the patron, but can also include one or more personal dances. In a following step, 424, a percentage of the winning bid is given to the subject entertainer. The percentage can be handed to the performer in cash, added to the performer's account for later access, or provided as a check. In some cases, it may be included in the performer's pay several days later. Of course, the payment or a portion of the payment may also precede step 422 in some cases. Because the entertainers are now enjoying an entirely new stream of revenue and, accordingly, increasing their overall take-home pay, the venue now has the option of increasing the house fee charged to each entertainer for the ability to perform at the venue.

According to an additional feature of the present invention, an auction can have a "soft close," which provides an amount of time after the song is over to continue bidding on the performer. The display 108 can, for instance, show the status of a soft close "Soft Close" in green or a "Last Chance" in Red.

In addition to displaying results of the auctions, the one or more dispersed video displays 203, 204 can display promotional messages or advertising 308. For example, a given auction might be sponsored by a business entity in return for including advertising for the entity's products or services during the auction.

Any of the displays 108 can be used during, between, or after auctions to display other information, such as graphical and recording data for the performers, future schedules of entertainers, future schedules of auctions, and myriad of other information. This information can be conveyed visually, audibly, or via a combination of both media forms.

In another embodiment of the present invention, a bidder may be permitted to submit a hand bid or with a special signage. As an optional type of bidding, patrons will be able to bid for a Dutch-type auction, which means for a pre-set winning price, the first bidder accepting this amount will automatically win the auction.

In one embodiment of the present invention, an identification device (e.g., key-tags with bar-codes, credit-card type devices, or others) is used to "log" the dancers in with the auctioneer prior to stepping on the stage or entering the room 100. Each dancer can associate the identification device with a reader (e.g., swipe the identification card across a reader installed on each stage). The system can connect the input from the identification device to a "dancer inventory" function on a central computer (or a distributed network through the Internet) so the facility can determine which performers are in the building and are actually working and to assist in the revenue accounting process.

The present invention provides a system that is beneficial to patrons, performers, and venue owners. In accordance with the performer's desire to generate as much money as possible, after finishing their performance on stage, they can now be hired directly until the next stage rotation to spend time at a patron's table. Similarly, entertainers can now spend less of their shift wasting time and feeling uncomfortable looking for potential clients to purchase dances. For the venue owner, an entirely new form of revenue stream is provided. Traditionally, a club owner had a concern that the private dance money could go exclusively to the dancers and not be shared as agreed with the club. Through implementations of the present invention, revenue is accounted for and automatically distributed between the club and the dancers.

Also advantageously, the patrons now have total control over the identity of the dancer with whom they spend time. Once inside, the patron can choose the dancer of his/her choice, thus alleviating the patron of the discomfort felt by having to say no to a dancer. The inventive auction system, therefore, is empowering for patrons.

The present invention, according to one additional feature, allows users of the bidding devices 106 to send message to each other or, in some embodiments, speak to each other in a walkie-talkie-type communication. The bidders can discuss the entertainers, their bids, or any other subject matter about which they wish to communicate.

As described above, bids are submitted through a combination of the device 106 and display 108. In one embodiment, the display 108 shows information, such as which girls are able to bid on as well as which girls will be able to bid on in the near future, i.e., "on deck.". The auction staff can also assign a default time, during which the active group of auctions are open. Further, the auction staff can assign a default soft close time which dictates whether a bid is placed on a performer in the last X seconds of the bidding window. When the current auction is finished, the auction staff can press a "next round" button, which closes the current auction and moves an on-deck performer to a "current" status and, possibly, moves the next on-deck performer to on-deck bidding status. In one embodiment, there is an option for automatic next round manipulator, which will automatically push the next round button once time has expired on the active round.

Although specific embodiments of the invention have been disclosed, those having ordinary skill in the art will understand that changes can be made to the specific embodiments without departing from the spirit and scope of the invention. The scope of the invention is not to be restricted, therefore, to the specific embodiments, and it is intended that the appended claims cover any and all such applications, modifications, and embodiments within the scope of the present invention.

Further embodiments of the invention are:
1. A method of conducting an auction, which comprises:
   identifying at least one adult-entertainment dancer with a unique identification;
   distributing at least one electronically wireless remote auction bidding device to a patron of an adult-entertainment facility, the bidding device having a unique bidding identifier and operable to electronically transmit a bid;
   electronically wirelessly connecting the bidding device to an electronic dancer time bidding system operable:
      to receive at least one bid from the bidding device;
      to associate the bid with the unique identification;
      determine if the bid has a bid-winning status; and
      to identify, at least to the dancer, the patron employing the bidding device corresponding to the bid having the bid-winning status; and providing the patron with the dancer's company for a pre-set amount of time.
2. The method according to item 1, further comprising:
   displaying on a display viewable by at least two people an amount of the at least one bid.
3. The method according to item 2, further comprising:
   displaying on the display an identifier of at least one of the bidding device and a secret identifier of the patron employing the bidding device, the secret identifier being only known to the patron employing the bidding device and an agent of the adult-entertainment facility.
4. The method according to item 3, further comprising:
   associating the identifier with a table location.
5. The method according to item 2, further comprising:
   displaying on the display a minimum price for ending the auction.
6. The method according to item 1, further comprising:
   receiving a message from the patron employing the bidding device; and
   transmitting the message to a second bidder for display on a display device associated with the second bidder.
7. A method of conducting an auction in an adult-entertainment facility, the method comprising:
   displaying a dancer on a stage;
   displaying on a display, a minimum bid for purchasing a session of time with the dancer;
   electronically receiving a first bid for the session of time;
   displaying the first bid on the display;
   electronically receiving a second bid for the session of time, the second bid being larger than the first bid;
   displaying the second bid on the display;
   ending the auction;
   identifying a bidder of the second bid to the dancer; and
   dividing an amount of the second big between the dancer and the adult-entertainment facility.
8. The method according to item 7, further comprising:
   displaying an identifier of one of a bidder of the first bid and a device submitting the first bid.
9. The method according to item 8, further comprising:
   associating the identifier with a table location.
10. The method according to item 7, further comprising:
   displaying on the display a minimum price for ending the auction.
11. The method according to item 7, further comprising:
   receiving a message from the first bidder; and
   transmitting the message to a second bidder for display on a display device associated with the second bidder.
12. The method according to item 7, wherein the electronically receiving comprises:
   wirelessly receiving a bid initiated at a remote bidding device.
13. The method according to item 7, further comprising:
   processing a payment from the bidder of the second bid.
14. The method according to item 7, wherein the ending the auction step comprises:
   ending the display of the dancer on stage; and
   providing a predefined amount of time for receiving additional bids.
15. A system for conducting an auction in an adult-entertainment facility, the system comprising:
   a display operable to display a plurality of entertainer identifiers each corresponding to a different one of a plurality of adult entertainers within an adult-entertainment facility;
   a first wireless transmitter operable to submit at least one of the entertainer identifiers, a first device identifier, and a first bid amount as consideration for receiving an amount of exclusive time with the identified adult entertainer;
   a receiver operable to wirelessly receive the entertainer identifier, the first bid, and the first device identifier from the first wireless transmitter;
   a second wireless transmitter operable to submit the entertainer identifier, a second bid, and a second device identifier, and
   a processor operable to determine which of the first bid and the second bid has a winning status and transmit display instructions to the display for displaying the bid with the winning status and a bidder of the bid having winning status.
16. The system according to item 15, wherein:
   the processor determines winning status by comparing the second bid to at least one of a minimum bid and the first bid.
17. The system according to item 15, wherein:
   the identifier of the bidder of the larger of the first bid and the second bid is an anonymous identifier.
18. The system according to item 15, further comprising:
   a fund-processing device operable to submit a charge to an account associated with the bidder of the larger of the first bid and the second bid.
19. The system according to item 15, wherein:
   the processor is further operable to cause the display to display an image of the identified entertainer.

What is claimed is:

## Claims

1. A method of conducting an auction, which comprises:
identifying at least one adult-entertainment dancer with a unique identification;
distributing at least one electronically wireless remote auction bidding device to a patron of an adult-entertainment facility, the bidding device having a unique bidding identifier and operable to electronically transmit a bid;
electronically wirelessly connecting the bidding device to an electronic dancer time bidding system operable:
to receive at least one bid from the bidding device;
to associate the bid with the unique identification;
determine if the bid has a bid-winning status; and
to identify, at least to the dancer, the patron employing the bidding device corresponding to the bid having the bid-winning status; and providing the patron with the dancer's company for a pre-set amount of time.

2. The method according to claim 1, further comprising:
displaying on a display viewable by at least two people an amount of the at least one bid.

3. The method according to claim 2, further comprising:
displaying on the display an identifier of at least one of the bidding device and a secret identifier of the patron employing the bidding device, the secret identifier being only known to the patron employing the bidding device and an agent of the adult-entertainment facility.

4. The method according to claim 3, further comprising:
associating the identifier with a table location.

5. The method according to claim 2, further comprising:
displaying on the display a minimum price for ending the auction.

6. The method according to claim 1, further comprising:
receiving a message from the patron employing the bidding device; and
transmitting the message to a second bidder for display on a display device associated with the second bidder.

7. A method of conducting an auction in an adult-entertainment facility, the method comprising:
displaying a dancer on a stage;
displaying on a display, a minimum bid for purchasing a session of time with the dancer;
electronically receiving a first bid for the session of time;
displaying the first bid on the display;
electronically receiving a second bid for the session of time, the second bid being larger than the first bid;
displaying the second bid on the display;
ending the auction;
identifying a bidder of the second bid to the dancer; and
dividing an amount of the second big between the dancer and the adult-entertainment facility.

8. The method according to claim 7, further comprising:
displaying an identifier of one of a bidder of the first bid and a device submitting the first bid.

9. The method according to claim 8, further comprising:
associating the identifier with a table location.

10. The method according to claim 7, further comprising:
displaying on the display a minimum price for ending the auction.

11. The method according to claim 7, further comprising:
receiving a message from the first bidder; and
transmitting the message to a second bidder for display on a display device associated with the second bidder.

12. The method according to claim 7, wherein the electronically receiving comprises:
wirelessly receiving a bid initiated at a remote bidding device.

13. The method according to claim 7, wherein the ending the auction step comprises:
ending the display of the dancer on stage; and
providing a predefined amount of time for receiving additional bids.

14. A system for conducting an auction in an adult-entertainment facility, the system comprising:
a display operable to display a plurality of entertainer identifiers each corresponding to a different one of a plurality of adult entertainers within an adult-entertainment facility;
a first wireless transmitter operable to submit at least one of the entertainer identifiers, a first device identifier, and a first bid amount as consideration for receiving an amount of exclusive time with the identified adult entertainer;
a receiver operable to wirelessly receive the entertainer identifier, the first bid, and the first device identifier from the first wireless transmitter;
a second wireless transmitter operable to submit the entertainer identifier, a second bid, and a second device identifier, and
a processor operable to determine which of the first bid and the second bid has a winning status and transmit display instructions to the display for displaying the bid with the winning status and a bidder of the bid having winning status.

15. The system according to claim 14, wherein:
the processor determines winning status by comparing the second bid to at least one of a minimum bid and the first bid.

16. The system according to claim 14, further comprising:
a fund-processing device operable to submit a charge to an account associated with the bidder of the larger of the first bid and the second bid.

17. The system according to claim 14, wherein:
the processor is further operable to cause the display to display an image of the identified entertainer.
